# EUROPÄISCHE PATENTSCHRIFT

(11) **EP 1 655 163 B1**
(45) Veröffentlichungstag und Bekanntmachung des Hinweises auf die Patenterteilung: **22.04.2009**
(21) Anmeldenummer: 05023915.1
(22) Anmeldetag: 03.11.2005
(51) Int. Cl.: B60J 7/12

(54) **Cabriolet-Fahrzeug mit einem Dachbezug**
Convertible vehicle with a flexible roof
Véhicule convertible avec un toit flexible

(30) Priorität: 05.11.2004 DE 102004053461
(43) Veröffentlichungstag der Anmeldung: 10.05.2006
(73) Patentinhaber: Wilhelm Karmann GmbH, 49084 Osnabrück (DE)
(72) Erfinder: Kreiling, Nils, 49078 Osnabrück (DE)

(56) Entgegenhaltungen:
- DE-A1- 10 251 300
- DE-A1- 10 251 987
- US-B1- 6 347 827
- US-B1- 6 390 532

## Beschreibung

Die Erfindung betrifft ein Cabriolet-Fahrzeug mit einem flexiblen Dachbezug nach dem Oberbegriff des Anspruchs 1, siehe z.B. US-B-6 347 827.

Es sind zahlreiche Voll- oder Teilcabriolet-Fahrzeuge bekannt, bei denen der Bezug zwischen seitlichen Längsrahmenteilen erstreckt ist. Bei der Dachöffnung ergibt sich dabei das Problem, daß bei herkömmlicher Faltung das vorderste Ende des flexibel bezogenen Dachbereichs mit seiner im geschlossenen Zustand nach innen weisenden Seite nach oben zeigt und dadurch Halteorgane zur Festlegung des vordersten Endes gefährlich nach oben ragen. Um dies zu vermeiden, ist es bekannt, das vorderste Ende in einer ungewendeten Orientierung in einer sog. Z-Faltung abzulegen. Im abgelegten zustand liegt dabei der die zumeist gewölbte Heckscheibe umfassende Bereich zuunterst, wobei dort die wenig oder gar nicht flexible Heckscheibe sich über die gesamte Breite des Dachpakets erstreckt und tief in die Karosserie ragt, wobei der Kofferraum erheblich eingeschränkt wird. Zudem ergibt sich ein relativ dickes Dachpaket.

Der Erfindung liegt das Problem zugrunde, bei einem Fahrzeug der genannten Art eine neue, günstige Ablage zu ermöglichen.

Die Erfindung löst dieses Problem durch ein Cabriolet-Fahrzeug mit den Merkmalen des Anspruchs 1. Hinsichtlich weiterer vorteilhafter Ausgestaltungen der Erfindung wird auf die Ansprüche 2 bis 12 verwiesen.

Mit der Erfindung liegt der die Heckscheibe umfassende Dachbereich zuoberst. Damit geht eine minimierte Erstreckung des Dachpakets nach unten hin in Richtung eines beispielsweise darunter befindlichen Kofferraums einher. Dessen Einschränkung durch das abgelegte Dach ist daher minimiert. Das Fahrzeug ist dennoch mit einem leichten und durchgehenden Stoffdach versehen, das bei geschlossener Dachstellung dessen durchgehende und vorteilhafte Optik ohne Zwischenschaltung starrer Dachteile beibehalten kann. Dem geschlossenen Dach ist die besondere Faltungsart nicht anzusehen. Die vorgeordneten Längsrahmenteile können wie bei herkömmlichen Faltungen im wesentlichen horizontal oberhalb von Seitenscheiben liegen und das geschlossene Dach in Form halten.

Wenn der Bezug nicht unmittelbar mit dem hinteren Längsrahmenteil verbunden ist, ist die Einfaltungsmöglichkeit optimiert. Bei einem relativ kurzen Dach mit nur zwei voreinander liegenden seitlichen Rahmenteilen kann dann der Bezug seitlich außerhalb eines hinteren Stoffhaltebügels nur mit den vorderen Längsrahmenteilen innerhalb der sog. Dachspitze verbunden sein, die dicht unterhalb der Heckscheibe abgelegt werden kann. Dies trägt dazu bei, daß der wesentliche Teil des Daches relativ hoch und daher den Kofferraum wenig störend ablegbar ist. Dann können die hinteren Längsrahmenteile gegensinnig zu den vorgeordneten gewölbt in seitlich außen liegenden Taschen des Fahrzeugs abgelegt werden, ohne daß der quer dazwischen liegende Bereich von Bezug überspannt wäre. Der verbleibende Raum zwischen diesen dann untersten Längsrahmenteilen ist erheblich vergrößert.

Insbesondere ist es dabei günstig, wenn die Heckscheibe derart gewölbt ist, daß ihr bezüglich der Fahrzeugquerrichtung mittlerer Bereich in geschlossener Dachstellung gegenüber seitlichen Bereichen weiter heckwärts gelegen ist und ein in offener Dachstellung dicht unterhalb der Heckscheibe gelegener Dachbereich, zum Beispiel die Dachspitze bei einem Vollcabriolet-Fahrzeug, in seiner der geschlossenen Dachstellung entsprechenden Orientierung ungewendet abgelegt ist. Dadurch sind die Heckscheibe und der darunter mit seinen Längsrahmenteilen gelegene Dachbereich bei offenem Dach gleichsinnig gewölbt und können dicht übereinander gestapelt werden; störende Hohlräume im Dachpaket können weitgehend vermieden werden.

Sofern der hintere Längsrahmenteil der Heckscheibe in Fahrtrichtung vorgeordnet ist und der Bezug unterhalb der Heckscheibe an einem im wesentlichen u-förmigen, beweglichen hinteren Stoffhaltebügel gehalten ist, kann dieser Stoffhaltebügel bei geöffnetem Dach seitlich den Stoff nach unten ziehen, ohne daß der quer dazwischen liegende Bereich von Teilen des Dachbezugs überspannt und damit für einzuschiebende Gepäckstücke blockierend wäre.

Eine erste Phase der Dachöffnungsbewegung, in der der die Heckscheibe umfassende Dachbereich in eine gegenüber der geschlossenen Dachstellung steiler stehende Stellung verlagerbar ist, ermöglicht das Daruntertauchen des vorgeordneten Dachbereichs. Das Dach braucht daher auch während seiner Öffnung nur einen geringen Raum nach oben und kann somit auch in niedrigen Garagen bewegt werden. Hierzu kann eine Übersetzung zwischen den Bewegungsgeschwindigkeiten verschiedener Dachbereiche geschaffen sein, etwa über ein verschiedene Baugruppen unterschiedlich bewegendes Getriebe, zum Beispiel ein Stillstandgetriebe. Dadurch kann der die Heckscheibe umfassender Dachbereich über einen weiten Zeitraum der Dachöffnung in Ruhe verharren, während mit diesem verbundene Teile bewegt werden, etwa um zunächst in einem teilgeöffneten Zustand den Durchtritt vorderer Dachbereiche zu ermöglichen und danach erst den die Heckscheibe umfassenden Bereich nach Art eines Deckels auf die abgelegten Dachteile zu legen.

Bei einer durchgehenden Erstreckung des Bezugs von einem Windschutzscheibenrahmen bis zu dem hinteren Stoffhaltebügel kann das gesamte Dach eines Vollcabriolet-Fahrzeugs günstig gepackt werden.

Wenn dem hinteren Längsrahmenteil drei weitere Längsrahmenteile vorgeordnet sind, die jeweils bei Dachöffnung um nahezu 180° gegeneinander einschwenken, kann auch ein Fahrzeug mit einem langen Insassenbereich, etwa ein Geländewagen, erfindungsgemäß ausgebildet sein; der Insassenraum kann vollständig durch ein mit einem flexiblen Bezug versehenes Dach in konventioneller Optik abgedeckt werden.

Eine zusätzliche Bewegungsmöglichkeit der Heckscheibe gegenüber einem sie umfassenden Rahmen zumindest bei geschlossenem Dach ermöglicht eine zusätzliche Flexibilisierung der Öffnungsmöglichkeiten des Fahrzeugs.

Weitere Vorteile und Merkmale der Erfindung ergeben sich aus in der Zeichnung zumindest schematisch dargestellten und nachfolgend beschriebenen Ausführungsbeispielen des Gegenstandes der Erfindung.

In der Zeichnung zeigt:
- Fig. 1: eine abgebrochene schematische Seitenansicht eines erfindungsgemäßen Cabrio- let-Fahrzeugs, hier eines Vollcabriolets, mit zwei aufeinander folgenden seitlichen Längsrahmenteilen bei geschlossenem Dach,
- Fig. 2: eine ähnliche Ansicht wie Fig. 1, jedoch während der ersten Phase der Dachöffnung,
- Fig. 3: eine ähnliche Ansicht wie Fig. 2 bei vollständig geöffnetem Dach,
- Fig. 4: eine alternative Ausführung eines Fahrzeugs mit vier aufeinander folgenden Längsrahmenteilen in geschlossener Dachstellung, wobei die abgelegte Stellung des Daches nur anhand der Lage der Längsrahmenteile angedeutet ist.

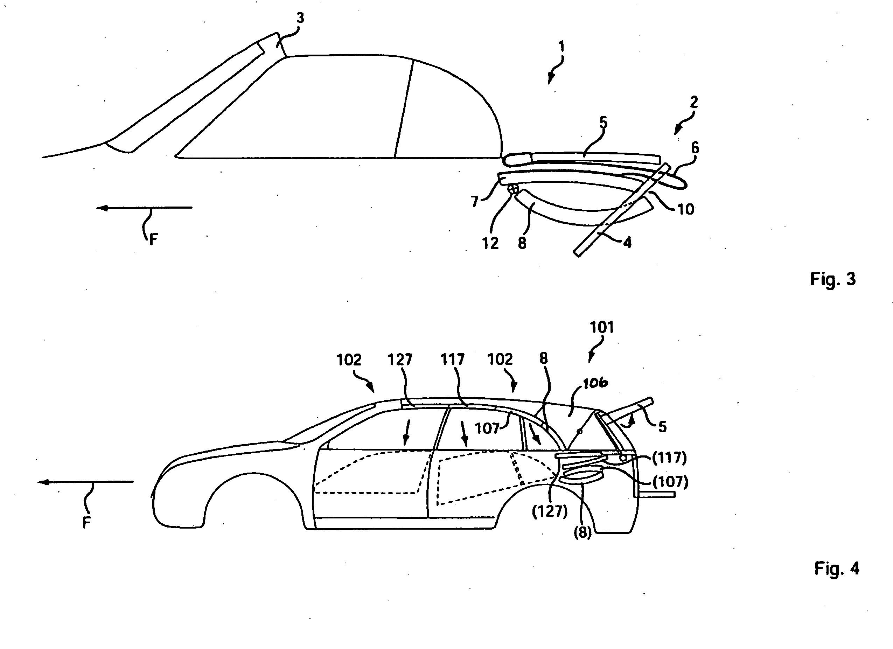

In den Zeichnungsfiguren 1 bis 3 des ersten Ausführungsbeispiels ist ein zweisitziges Fahrzeug 1 dargestellt, im zweiten Ausführungsbeispiel nach Fig. 4 ein mit zumindest einer Rückbank versehenes vier- oder mehrsitziges Fahrzeug 101.

Dabei kann lediglich ein hinterer Dachabschnitt mit einem flexiblen Bezug versehen sein und in Fahrtrichtung F nach vorne zum Beispiel ein fester Dachteil anschließen. Gemäß den Zeichnungen ist hingegen jeweils das gesamte Dach 2, 102 zwischen einem Windschutzscheibenrahmen 3 und einem hinteren Stoffhaltebügel 4 außerhalb einer Heckscheibe 5 durchgehend von einem flexiblen Bezug 6, 106 überspannt, was eine angenehme klassische Cabriolet-Optik ergibt. Die Heckscheibe 5 kann gegenüber einem sie einfassenden Rahmen separat ausschwenkbar sein, wie im zweiten Ausführungsbeispiel (Fig. 4) angedeutet ist.

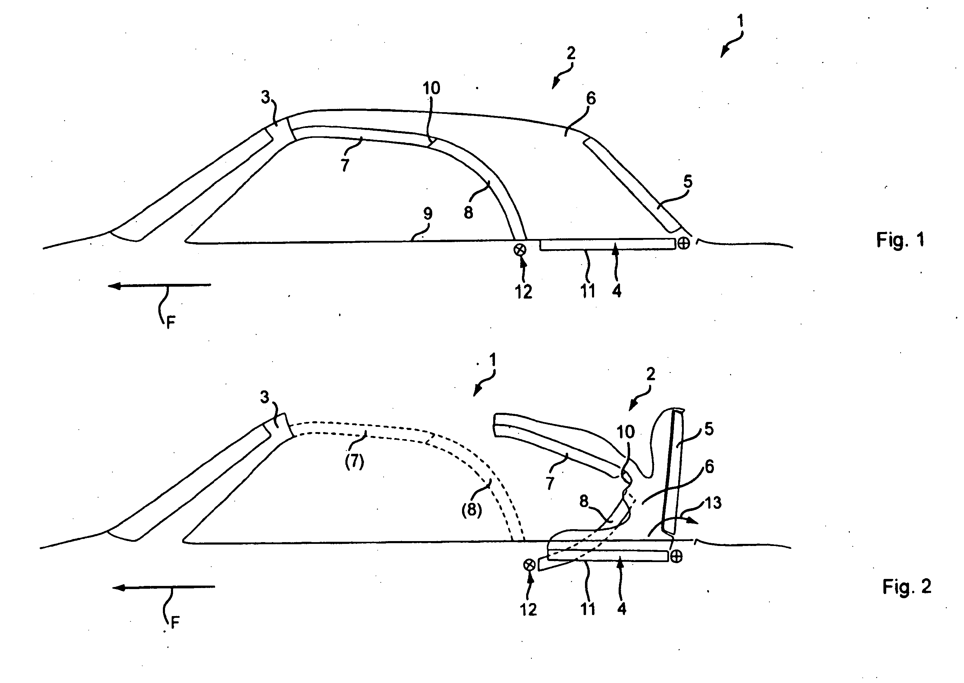

Bei dem in Fig. 1 dargestellten Fahrzeug 1 sind bei geschlossenem Dach 2 zwei seitliche, aufeinander folgende Längsrahmenteile 7, 8 vorgesehen. Der Bezug 6 ist seitlich nur an dem vorderen Längsrahmenteil 7 unmittelbar festgelegt, während der hintere Längsrahmenteil 8 in geschlossener Stellung zum Beispiel ein Seil des Bezugs 6 spannt und dieses bei Dachöffnung (Fig. 2) freigibt, so daß sich dann der Bezug 6 von dem hinteren, von der Fensterbrüstungslinie 9 schräg nach vorne aufragenden Längsrahmenteil 8, der häufig auch als Hauptsäule bezeichnet wird, löst.

Der hintere und der diesem vorgeordnete Längsrahmenteil 7, 8 sind am Gelenk 10 miteinander verbunden und zur Dachöffnung gegeneinander um nahezu 180° einschwenkbar, so daß sie bei geöffnetem Dach 2 in einer gegensinnig zueinander gewölbten Stellung liegen (Fig. 3).

Der hintere Längsrahmenteil 8 ist zudem dem Bereich der Heckscheibe 5 in Fahrtrichtung F an der Fahrzeugquerseite vorgeordnet. Der den Bereich dazwischen abdeckende Bezug 6 - auch hier ist kein fester und sperriger Dachabschnitt erforderlich - ist für seine Spannung unterhalb und seitlich der Heckscheibe 5 an dem im wesentlichen u-förmigen hinteren Stoffhaltebügel 4 gehalten. Dieser ist derart beweglich, daß er in seinem hinteren, unterhalb der Heckscheibe 5 liegenden Bereich schwenkbar angebunden ist und seine seitlich mit einer Komponente in Fahrtrichtung F ragenden Schenkel 11, die ebenfalls mit dem Bezugsstoff 6 verbunden sind, zur Dachöffnung abwärts verlagerbar sind.

In einer ersten Phase der Dachöffnungsbewegung (Übergang von Fig. 1 zu Fig. 2) ist der die Heckscheibe 5 umfassende Dachbereich mit den seitlich davon liegenden Bezugsanteilen, die mit Stoffreservoirs versehen sein können, in eine gegenüber der geschlossenen Dachstellung leicht steiler stehende Stellung in Richtung des Pfeils 13 verlagerbar (in Fig. 2 zur Verdeutlichung übertrieben dargestellt). Die Verlagerung ist hier eine reine Schwenkbewegung, was nicht zwingend ist. Die Heckscheibe 5 kann bei dem dann beginnenden Durchtritt der vorderen Dachbereiche auch bei nur einem gemeinsamen Antrieb für die gesamte Dachbewegung ihre Lage beibehalten. Hierzu dient ein Stillstand- oder Koppelrastgetriebe, das unterschiedliche Geschwindigkeiten verschiedener Dachbereiche ermöglicht.

In dieser steiler stehenden Stellung der Heckscheibe 5 kann der hintere Längsrahmenteil 8 um eine unterhalb und/oder im Nahbereich der Fensterbrüstungslinie 9 gelegene und quer zum Fahrzeug 1 gelegene Achse 12 heckwärts verschwenken, wobei gleichzeitig der vorgeordnete Längsrahmenteil 7 um das Gelenk 10 nach Art einer Z-Faltung gegensinnig hierzu einschwenkt und in zum geschlossenen Zustand gleichsinniger Orientierung ablegbar ist. Der hintere Längsrahmenteil 8 legt sich dabei bezüglich der Fahrzeugquerrichtung innerhalb des Bezugs 6 ab. Im Unterschied zur Z-Faltung ist das hier entstehende Dachpaket allerdings flacher, da die hinteren Längsrahmenteile 8 bei der Öffnung keine Stofflage zwischen sich spannen und somit die in gleichbleibender Orientierung abgelegten vorderen Längsrahmenteile zwischen sich die dann untere Stofflage spannen. Hierüber legt sich beim Schließen des die Heckscheibe 5 umfassenden Bereichs entgegen dem Pfeil 13 (Fig. 3) gegensinnig ein mittlerer Stoffbereich, der dann nicht von seitlichen Rahmenteilen eingefaßt ist und somit nur seine eigene Materialdicke aufweist. An dessen vordere Faltungskante schließt der die Heckscheibe 5 umfassende Bereich an, sobald er nach Art eines Deckels zurückgeschwenkt ist. Durch die gleichzeitige Abwärtsverlagerung der Seitenschenkel 11 des Stoffhaltebügels 4 wird auch der Bezug 6 an den Seiten entsprechend weit abwärts gezogen. In der Fahrzeuglängsmittelebene ergibt sich daraus eine S-Form der abgelegten Stoffbahnen.

Bei der Dachbewegung kann durch das Stillstandgetriebe sichergestellt sein, daß ein Teil des Daches 2 festgehalten bleibt, während andere Teile sich bewegen können. Eine Fehlbedienung ist dabei ausgeschlossen.

In dem zweiten Ausführungsbeispiel nach Fig. 4 ist ein viertüriger Kombi oder Geländewagen gezeigt. Bei diesem sind bei ansonsten prinzipieller Ähnlichkeit zum Dachöffnungsablauf des ersten Ausführungsbeispiels dem hinteren Längsrahmenteil 8 drei weitere Längsrahmenteile 107, 117, 127 vorgeordnet, die jeweils bei Dachöffnung um nahezu 180° gegeneinander einschwenken. Damit kann das Dach 102 eine erhebliche Länge erreichen und etwa auch einen Insassenraum mit zwei oder drei Sitzreihen hintereinander und einem Kofferraum als Softtop vollständig überspannen. Die Heckscheibe 5 deckt auch hier trotz ihrer integralen Einbettung in den Dachbezug 106 bei geöffnetem Dach 102 das Dachpaket nach oben hin ab, wobei in beiden Ausführungsbeispielen keine vollständige Abdeckung zwingend ist, jedoch zumindest ein hinterer Teil der Oberfläche des Dachpakets von der Heckscheibe 5 gebildet ist. In Fig. 4 ist weiterhin die optionale Ausschwenkmöglichkeit der Heckscheibe 5 gegenüber einem sie umgebenden Rahmen sichtbar. Die hier drei hintereinander folgenden Seitenscheiben sind ebenso wie beim gezeichneten Zweitürer des ersten Ausführungsbeispiels jeweils rahmenlos und voll versenkbar, wie in der Fig. 4 gestrichelt angedeutet ist.

Die Erfindung ist in beiden Ausführungsbeispielen sowohl bei Fahrzeugen mit manuell zu bewegenden Dächern 2, 102 als auch bei deren voll-oder teilautomatischer Beweglichkeit anwendbar.

## Patentansprüche

1. Cabriolet-Fahrzeug (1;101) mit einem außerhalb einer Heckscheibe (5) mit einem flexib-len Bezug (6;106) versehenen Dach (2;102), bei dem der Bezug (6;106) seitlich über einen hinteren, sich von einer Fensterbrüstungslinie (9) mit einer Aufwärtskomponente erstreckenden Längsrahmenteil (8) und zumindest einen bei geschlossenem Dach (2;102) daran in Fahrtrichtung (F) anschließenden vorgeordneten Längsrahmenteil (7;107;117;127) begrenzt ist, **dadurch gekennzeichnet, daß** zur Dachöffnung der hintere Längsrahmenteil (8) in eine zumindest im wesentlichen unter dem vorgeordneten Längsrahmenteil (7;107;117;127) gelegene Stellung verlagerbar und der die Heckscheibe (5) umfassende Bereich nach Art eines Deckels zumindest über einem Teil der so gelagerten Dachbereiche ablegbar ist.

2. Cabriolet-Fahrzeug (1;101) nach Anspruch 1, **dadurch gekennzeichnet, daß** der Bezug (6) nicht unmittelbar mit dem hinteren Längsrahmenteil (8) verbunden ist.

3. Cabriolet-Fahrzeug (1;101) nach einem der Ansprüche 1 oder 2, **dadurch gekennzeichnet, daß** der hintere (8) und zumindest ein diesem vorgeordneter Längsrahmenteil (7;107) zur Dachöffnung gegeneinander einschwenkbar sind.

4. Cabriolet-Fahrzeug (1;101) nach einem der Ansprüche 1 bis 3, **dadurch gekennzeichnet, daß** der hintere Längsrahmenteil (8) der Heckscheibe (5) in Fahrtrichtung (F) vorgeordnet ist und der Bezug (6) unterhalb der Heckscheibe (5) an einem im wesentlichen u-förmigen hinteren Stoffhaltebügel (4) gehalten ist.

5. Cabriolet-Fahrzeug (1;101) nach Anspruch 4, **dadurch gekennzeichnet, daß** der Stoffhaltebügel (4) beweglich gehalten ist.

6. Cabriolet-Fahrzeug (1;101) nach Anspruch 5, **dadurch gekennzeichnet, daß** der Stoffhaltebügel (4) in seinem hinteren, unterhalb der Heckscheibe (5) liegenden Bereich schwenkbar angebunden ist und seine seitlich mit einer Komponente in Fahrtrichtung ragenden Schenkel (11) zur Dachöffnung abwärts verlagerbar sind.

7. Cabriolet-Fahrzeug (1;101) nach einem der Ansprüche 1 bis 6, **dadurch gekennzeichnet, daß** in einer ersten Phase der Dachöffnungsbewegung der die Heckscheibe (5) umfassende Dachbereich in eine gegenüber der geschlossenen Dachstellung steiler stehende Stellung verlagerbar (13) ist.

8. Cabriolet-Fahrzeug (1;101) nach Anspruch 7, **dadurch gekennzeichnet, daß** in der steiler stehenden Stellung der Heckscheibe (5) der hintere Längsrahmenteil (8) um eine unterhalb und/oder im Nahbereich der Fensterbrüstungslinie (9) und quer zum Fahrzeug gelegene Achse (12) heckwärts verschwenkbar ist.

9. Cabriolet-Fahrzeug (1;101) nach einem der Ansprüche 1 bis 8, **dadurch gekennzeichnet, daß** der Bezug (6;106) sich durchgehend von einem Windschutzscheibenrahmen (3) bis zu dem hinteren Stoffhaltebügel (4) erstreckt.

10. Cabriolet-Fahrzeug (101) nach einem der Ansprüche 1 bis 8, **dadurch gekennzeichnet, daß** dem hinteren Längsrahmenteil (8) drei weitere Längsrahmenteile (107,117,127) vorgeordnet sind, die jeweils bei Dachöffnung um nahezu 180° gegeneinander einschwenken.

11. Cabriolet-Fahrzeug (1;101) nach einem der Ansprüche 1 bis 10, **dadurch gekennzeichnet, daß** die Heckscheibe (5) derart gewölbt ist, daß ihr bezüglich der Fahrzeugquerrichtung mittlerer Bereich in geschlossener Dachstellung gegenüber seitlichen Bereichen weiter heckwärts gelegen ist und der in offener Dachstellung unmittelbar unterhalb der Heckscheibe (5) gelegene Dachbereich in seiner der geschlossenen Dachstellung entsprechenden Orientierung ungewendet abgelegt ist.

12. Cabriolet-Fahrzeug (1;101) nach einem der Ansprüche 1 bis 11, **dadurch gekennzeichnet, daß** die Heckscheibe (5) gegenüber einem sie umfassenden Rahmen zumindest bei geschlossenem Dach (2;102) beweglich ist.

## Claims

1. Convertible vehicle (1; 101) having a roof (2; 102) provided with a flexible cover (6; 106) around a rear window (5), in which the cover (6; 106) is bounded laterally by a rear longitudinal frame part (8), which extends with an upward component from a window shoulder line (9), and at least one longitudinal frame part (7; 107; 117; 127), which is disposed forwardly thereof in the driving direction (F) and connects thereto when the roof (2; 102) is closed, **characterized in that**, for opening the roof, the rear longitudinal frame part (8) is displaceable into a position located at least substantially underneath the forwardly-disposed longitudinal frame part (7; 107; 117; 127) and the portion surrounding the rear window (5) is depositable like a cover at least over a part of the thus-stored roof portions.

2. Convertible vehicle (1; 101) according to claim 1, **characterized in that**, the cover (6) is not directly connected with the rear longitudinal frame part (8).

3. Convertible vehicle (1; 101) according to one of claims 1 or 2, **characterized in that**, the rear (8) and at least one longitudinal frame part (7; 107) disposed forwardly thereof are inwardly pivotable against each other for opening the roof.

4. Convertible vehicle (1; 101) according to one of claims 1 to 3, **characterized in that**, the rear longitudinal frame part (8) is disposed forwardly of the rear window (5) in the driving direction (F) and the cover (6) is held by a substantially U-shaped rear fabric-holding bow (4) underneath the rear window (5).

5. Convertible vehicle (1; 101) according to claim 4, **characterized in that**, the fabric-holding bow (4) is movably held.

6. Convertible vehicle (1; 101) according to claim 5, **characterized in that**, the fabric-holding bow (4) is pivotably linked in its rear portion, which lies underneath the rear window (5), and its legs (11), which project with a component laterally in the driving direction, are downwardly displaceable for opening the roof.

7. Convertible vehicle (1; 101) according to one of claims 1 to 6, **characterized in that**, in a first phase of the roof opening movement, the roof portion surrounding the rear window (5) is displaceable (13) into an upright-standing position as compared to the closed roof position.

8. Convertible vehicle (1; 101) according to claim 7, **characterized in that**, the rear longitudinal frame part (8) is rearwardly pivotable into the upright-standing position of the rear window (5) about an axis (12) that is located underneath and/or in the vicinity of the window shoulder line (9) and transverse to the vehicle.

9. Convertible vehicle (1; 101) according to one of claims 1 to 8, **characterized in that**, the cover (6; 106) extends continuously from a windscreen frame (3) up to the rear fabric-holding bow (4).

10. Convertible vehicle (101) according to one of claims 1 to 8, **characterized in that**, three further longitudinal frame parts (107, 117, 127) are disposed forwardly of the rear longitudinal frame part (8) and each inwardly pivots about nearly 180° against each other when opening the roof.

11. Convertible vehicle (1; 101) according to one of claims 1 to 10, **characterized in that**, the rear window (5) is curved such that its middle portion relative to the vehicle transverse direction is located further rearwardly relative to lateral portions in the closed roof position and the roof portion located directly underneath the rear window (5) in the opened roof position is deposited in a reverse manner in its orientation corresponding to the closed roof position.

12. Convertible vehicle (1; 101) according to one of claims 1 to 11, **characterized in that**, the rear window (5) is movable relative to a frame surrounding it at least when closing the roof (2;102).

## Revendications

1. Véhicule cabriolet (1 ; 101) ayant un toit (2 ; 102) muni au-delà d'une lunette arrière (5), d'un revêtement flexible (6 ; 106), selon lequel, le revêtement (6 ; 106) est délimité latéralement par une partie longitudinale de cadre (8 ), s'étendant avec une composante montante à partir d'une ligne de fenêtre (9), et au moins une partie de cadre longitudinal (7 ; 107 ; 117 ; 127) adjacente à celle-ci dans la direction de déplacement (F), lorsque le toit (2 ; 102) est fermé, et qui se trouve en amont,
**caractérisé en ce que**
la partie arrière de cadre longitudinal (8) par rapport à l'ouverture de toit peut être déplacée dans une position située au moins principalement sous la partie de cadre longitudinal amont (7 ; 107 ; 117 ; 127) et qui permet de déposer la région entourant la lunette arrière (5) à la manière d'un couvercle, au moins sur une partie des régions de toit correspondantes.

2. Véhicule cabriolet (1 ; 101) selon la revendication 1,
**caractérisé en ce que**
le revêtement (6) n'est pas relié directement à la partie de cadre longitudinal arrière (8).

3. Véhicule cabriolet (1 ; 101) selon l'une des revendications 1 ou 2,
**caractérisé en ce que**
la partie arrière (8) et au moins une partie de cadre longitudinal (7 ; 107) en avant de celle-ci peuvent être basculées l'une par rapport à l'autre pour ouvrir le toit.

4. Véhicule cabriolet (1 ; 101) selon l'une des revendications 1 à 3,
**caractérisé en ce que**
la partie de cadre longitudinal arrière (8) est en amont de la lunette arrière (5) dans la direction de déplacement (F) et le revêtement (6) sous la lunette arrière (5) est tenu à un étrier de maintien de tissu (4) arrière, pratiquement en forme de U.

5. Véhicule cabriolet (1 ; 101) selon la revendication 4,
**caractérisé en ce que**
l'étrier de maintien de tissu (4) est mobile.

6. Véhicule cabriolet (1 ; 101) selon la revendication 5,
**caractérisé en ce que**
l'étrier de maintien de tissu (4) est fixé de manière basculante dans sa région arrière sous la lunette arrière (5) et ses branches (11), dépassant latéralement par une composante dans la direction de déplacement, peuvent être abaissées pour ouvrir le toit.

7. Véhicule cabriolet (1 ; 101) selon l'une des revendications 1 à 6,
**caractérisé en ce que**
dans une première phase du mouvement d'ouverture de toit, la région de toit comprenant la lunette arrière (5) se déplace (13) dans une position plus raide que celle de la position du toit fermé.

8. Véhicule cabriolet (1 ; 101) selon la revendication 7,
**caractérisé en ce que**
dans la position debout plus raide de la lunette arrière (5), la partie du cadre longitudinal arrière (8) bascule autour d'un axe (12) transversal au véhicule et/ou située dans la région proche de la ligne de bas de fenêtre (9).

9. Véhicule cabriolet (1 ; 101) selon l'une des revendications 1 à 8,
**caractérisé en ce que**
le revêtement (6 ; 106) s'étend de façon continue d'un cadre de pare-brise (3) jusqu'à l'étrier de maintien de tissu (4), arrière.

10. Véhicule cabriolet (1 ; 101) selon l'une des revendications 1 à 8,
**caractérisé en ce que**
trois autres parties de cadre longitudinal (107 ; 117 ; 127) sont prévues en avant de la partie de cadre longitudinal arrière (8), et ces parties de cadre longitudinal sont basculées de façon rentrante l'une par rapport à l'autre pratiquement de 180° lorsqu'on ouvre le toit.

11. Véhicule cabriolet (1 ; 101) selon l'une des revendications 1 à 10,
**caractérisé en ce que**
la lunette arrière (5) est bombée pour que sa zone médiane par rapport à la direction transversale du véhicule, lorsque la position du toit est fermée, soit située plus à l'arrière par rapport aux zones latérales et que la zone de toit située directement en dessous de la lunette arrière (5) lorsque le toit est en position ouverte, puisse être déposée sans être retournée dans son orientation de la position du toit fermé.

12. Véhicule cabriolet (1 ; 101) selon l'une des revendications 1 à 11,
**caractérisé en ce que**
la lunette arrière (5) est mobile par rapport à un cadre qui l'entoure au moins lorsque le toit (2 ; 102) est fermé.
